# EUROPEAN PATENT SPECIFICATION

(11) **EP 3 922 839 B1**
(45) Date of publication and mention of the grant of the patent: **11.09.2024**
(21) Application number: 21178044.0
(22) Date of filing: 07.06.2021
(51) Int. Cl.: F03D 1/06, F03D 3/00, F03D 3/06

(54) **VERTICAL WIND POWER PLANT**
VERTIKALES WINDKRAFTWERK
CENTRALE ÉOLIENNE VERTICALE

(30) Priority: 10.06.2020 SE 2050686
(43) Date of publication of application: 15.12.2021
(73) Proprietor: Carlson, Björn, 723 40 Västerås (SE)
(72) Inventor: Carlson, Björn, 723 40 Västerås (SE)
(74) Representative: Bjerkén Hynell KB

(56) References cited:
- WO-A1-2013/170497
- CN-A- 106 837 684
- CN-A- 107 165 776
- GB-A- 2 475 694
- SE-A1- 1 230 048
- US-A- 5 256 034

## Description

### TECHNICAL FIELD

The present invention relates to a vertical wind power plant comprising a bucket-wing.

### BACKGROUND

For CO2-free power production, wind power is today the type of energy that grows the most in terms of power. The wind power units are dependent on good wind conditions and development goes towards larger sizes considering the power with higher towers and longer rotor blades, which have a negative effect on the local environment and make it more expensive and difficult from an installation and operating point of view.

Despite greater power effects for individual units, in the event of large energy needs over time, the individual units must be concentrated in large wind farms that can be built in sparsely populated areas or at sea with long network distances to consumers, which requires an extension of power grids.

During windless periods and especially when these occur in cold conditions, power from wind must be compensated with other types of power such as hydropower or nuclear power if such production exists in the country, with coal or gas-fired power plants that are on standby or with energy storage. Documents CN106837684 and WO2013/170497 are prior art examples of vertical axis wind turbines.

### SUMMARY

The object of the present invention is to provide a vertical wind power plant for power generation with air as medium and is comprised as a main component in a plant for CO2-free production of electricity for power grids or power for machinery. The principles of the invention are useful in units for low and for very high effects.

The object is achieved by a vertical wind power plant as defined in claim 1. The present invention solves the problems for conventional wind power plants as above by having the features specified in the following claims.

The bucket-wing, for a vertical wind power plant, comprises a rear wing blade having a concave side for capturing wind, a convex side, an inner end and an outer end, and a front profile wing blade having a concave side, a convex side, an inner end and an outer end. The front profile wing blade and the rear wing blade are arranged at a distance from each other so that the concave side of the front profile wing blade faces the convex side of the rear wing blade to form a passage between the front profile wing blade and the rear wing blade with an opening between the inner ends. The front profile wing blade and the rear wing blade are arranged so that the passage tapers in a direction from the inner ends towards the outer ends. The front profile wing blade is shorter between the inner end and the outer end than the rear wing blade. In the direction of rotation, the front profile wing blade is in front of the rear wing blade.

During rotation of the vertical wind power plant, air is captured via the bucket-wing, air via the opening in the wedge-shaped bucket and the centrifugal force presses the air with high pressure towards the narrow gap so that a flat jet of high velocity flushes air along a large part or the entire free convex front side of the bucket-wing so that negative pressure is created and gives traction to the bucket-wing the rotation lap around.

The force of the negative pressure along the front of the bucket-wing multiplied by the lever radius towards the center of the wind power plant where the bucket-wing is mounted on, is transmitted together with the other bucket-wings' traction to the shaft tower that drives the underlying generator or machinery.

The front profile wing blade is, for example, one third of the rear wing blade. The bucket-wing then has a rearward bent rear wing blade where the third towards the inner end has a front profile wing blade so that a wedge-shaped and rearward bent bucket is formed between the wings with a wide opening towards the center and which tapers towards the periphery so that only a narrow vertical gap is formed.

It should be noted that the bucket-wing has an extension in height, i.e. vertically when the bucket-wing is arranged in a vertical wind power plant.

The bucket-wing can also comprise a floor and a roof. In such a case, the floor is arranged between a lower edge of the front profile wing blade and a lower edge of the rear wing blade and the roof is arranged between an upper edge of the front profile wing blade and an upper edge of the rear wing blade so that the passage between the front profile wing blade and the rear wing blade is enclosed on all the sides and open at the ends. Thus, a tunnel is formed between the opening between the inner ends and the opening between the outer end of the rear wing blade and the outer profile wing blade. This to prevent air release downwards and upwards.

The front profile wing blade may comprise a channel for air with an outlet on the convex side of the front profile wing blade with the air flow directed towards the outer end of the front profile wing blade. Such a channel can be used to start the rotation of a vertical wind power plant at low wind speeds.

The front profile wing blade may also comprise a channel for air having an outlet at the inner end of the front profile wing blade to blow out air that prevents external objects from being sucked into between the rear wing blade and the front profile wing blade. By external objects is meant, for example, animals, insects or debris. In this way, animals are protected from being sucked into the passage between the blades and being injured. The blades are also protected towards being damaged by animals or objects entering the passage.

The outer end of the front profile wing blade may comprise a distance-ruler that is adjustable to change the distance between the outer end and the rear wing blade. Different distances can be optimal for different rotational speeds or wind strengths.

The vertical wind power plant comprises a central shaft tower, at least two wing shafts arranged at a distance from the central shaft tower, at least one wing spoke for each of the at least two wing shafts connecting the central shaft tower and the respective wing spoke, and at least one bucket-wing as above arranged on each of the at least two wing shafts. The central shaft tower can either be rotating or comprise components that connect to the wing spokes to allow rotation of the wing shafts with the bucket-wings.

The vertical wind power plant may comprise, at the at least one wing spoke, comprises a lower wing spoke for each of the at least two wing shafts connecting the central shaft tower and a lower part of the respective wing shaft, and an upper wing spoke for each of the at least two wing shafts connecting the central shaft tower and an upper part of the respective wing shaft. Using two wing spokes makes the construction more stable and is particularly advantageous for large constructions.

The inner end of the rear wing blade and the front profile wing blade, respectively, is the part which is arranged closest to the central shaft tower and the outer end is arranged on the opposite side from the inner end.

The vertical wind power plant may comprise at least two bucket-wings which are arranged stacked on each other, on each of the at least two wing shafts. Thus, bucket-wings can be stacked on the wing shafts to create a higher composite bucket-wing for a larger wind power plant.

The vertical wind power plant may comprise an installation gondola arranged on each of the at least two wing shafts, the installation gondola comprises a fan and a channel system arranged to blow air into channels arranged in the bucket-wing. The bucket-wings can thus receive air supplied to their channels from the installation gondola.

The vertical wind power plant may comprise at least one support wheel per lower wing spoke, mounted on the respective lower wing spoke and arranged to roll on a ground below the vertical wind power plant to distribute the load towards the ground. With support wheels that help to distribute the load towards the ground, the load on the wind power plant's load-bearing components such as the shaft tower and the wing cranes will not be as large. Larger wind power plants can then be built.

The vertical wind power plant with CO2 free power production has greater application than conventional wind power plants with problems according to the background above.

The vertical wind power plant is independent of good wind conditions and can therefore be built close to power needs, strengthen existing distribution networks and reducing the need of their expansion. They are operated as needed all year round without requirements for other power plants that are on standby or for energy storage.

The vertical wind power plant can be built for large effects and adapted to suitable power sizes for phasing in on the power grids. One unit replaces many wind power plants in parks on land or at sea and despite greater effect, it has a lower altitude and less impact on the local environment. Heavy equipment such as a generator and auxiliary installations are located on the ground for easy installation and maintenance.

Suitable construction sites with existing main grids can be nuclear power plants, where in addition future power needs will be great during their long shutdown time and demolition. Coal mines with open pits and deep valleys after lignite mining have space for many vertical wind power plants.

### BRIEF DESCRIPTION OF THE DRAWINGS

The invention will now be explained in more detail by describing various embodiments of the invention and with reference to the accompanying drawings.
Figure 1 shows a top view of an example bucket-wing.
Figure 2 shows an overview view of an example of a vertical wind power plant.
Figure 3 shows a half side view for an example of a vertical wind power plant.
Figure 4 shows a half view from above for an example of a vertical wind power plant.
Figure 5 shows a side view of an example bucket-wing.
Figure 6 shows the front view of an example bucket-wing.
Figure 7 shows a top view of an example bucket-wing.
Figure 8 shows a top view of an example bucket-wing.
Figure 9 shows a top view of an example installation gondola.

### DETAILED DESCRIPTION

The present invention is not limited to the embodiments shown, but may be varied and modified within the scope of the appended claims. For example, a vertical wind power plant may have one or more described bucket-wings stacked on each other. Vertical wind power plants can also have different numbers of shafts with wings mounted.

By vertical wind power plant is meant wind power plants with vertically placed rotor shaft.

The vertical wind power plant described herein, also called wind, wing power carousel, is a device that, with the help of air as a medium, centrifugal force and fluid engineering laws, is comprised as the power-generating unit in a plant for the production of CO2-free electric power or engine power.

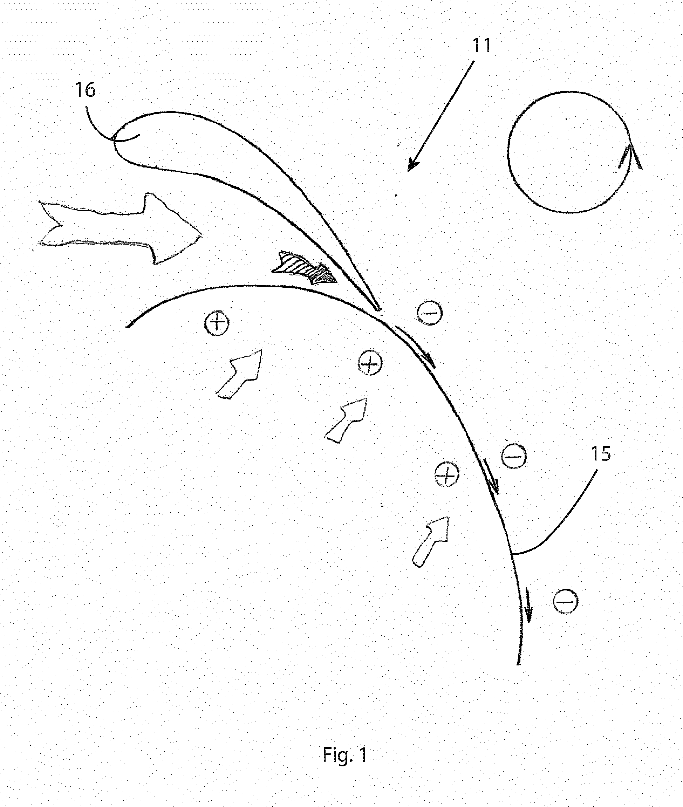

Figure 1 shows a top view of a bucket-wing 11. The bucket-wing, for a vertical wind power plant, comprises a rear wing blade 15 having a concave side to catch wind, a convex side, an inner end and an outer end, and a front profile wing blade 16 having a concave side, a convex side, an inner end and an outer end. The front profile wing blade and the rear wing blade 15 are spaced apart so that the concave side of the front profile wing blade faces the convex side of the rear wing blade so as to form a passage between the front profile wing blade and the rear wing blade 15 with an opening between the inner the ends. The front profile wing blade 16 and the rear wing blade 15 are arranged so that the passage tapers in a direction from the inner ends to the outer ends. The front profile wing blade 16 is shorter between the inner end and the outer end than the rear wing blade 15. Thus, in the direction of rotation, the front profile wing blade 16 is in front of the rear wing blade 15.

The arrows in figure 1 show where the wind flows towards the rear wing blade 15 and into the passage between the rear wing blade and the front profile wing blade 16. The arrow in circle shows in which direction a vertical wind power plant would rotate with this bucket-wing mounted.

The minus signs on the rear wing blade 15 represent the negative pressure formed due to the air being forced, via the passage, towards the outer end. The plus signs on the concave side indicate the overpressure that occurs when the wind blows towards the rear wing blade.

The front profile wing blade 16 is, for example, one third of the rear wing blade 15. It may also be half or a quarter. Thus, the front profile wing blade 16 is shorter than the rear wing blade 15. The bucket-wing can thus have a rearward bent rear wing blade where the third towards the inner end has a front profile wing blade so that a wedge-shaped and backward bent bucket is formed between the wings with wide opening towards the center and narrowing towards the periphery so that only a narrow vertical gap is formed.

It should be noted that the bucket-wing 11 has an extension in height, i.e. vertically when the bucket-wing is arranged on a vertical wind power plant.

The bucket-wing 11 may also comprise a floor and a roof. In this case, the floor is arranged between a lower edge of the front profile wing blade 16 and a lower edge of the rear wing blade 15 and the roof is arranged between an upper edge of the front profile wing blade 16 and an upper edge of the rear wing blade 15 so that the passage between the front profile wing blade and the rear wing blade 15 are enclosed on all sides and open at the ends. A tunnel is thus formed between the opening between the inner ends and the opening between the outer end blade 15 and the outer end of the front profile wing blade. This is to prevent air release downwards and upwards.

The front profile wing blade 16 may comprise a channel for air with an outlet on the convex side of the front profile wing blade with the air flow directed towards the outer end of the front profile wing blade. Such a channel can be used to start the rotation of a vertical wind power plant at low wind speeds. The outlet on the channel is, for example, directed so that the air blows out parallel to the surface on the convex side.

The front profile wing blade 16 may also comprise a channel for air having an outlet at the inner end of the front profile wing blade 16 to blow out air which prevents external objects from being sucked in between the rear wing blade 15 and the front profile wing blade 16. Thus, animals are protected from entering the passage between the leaves and are injured.

The blades are also protected towards being damaged by animals or objects sucked into the passage.

The outer end of the front profile wing blade may comprise a distance-ruler 17, which is adjustable to change the distance between the outer end and the rear wing blade 15. Different distances may be optimal for different rotational speeds or wind strengths.

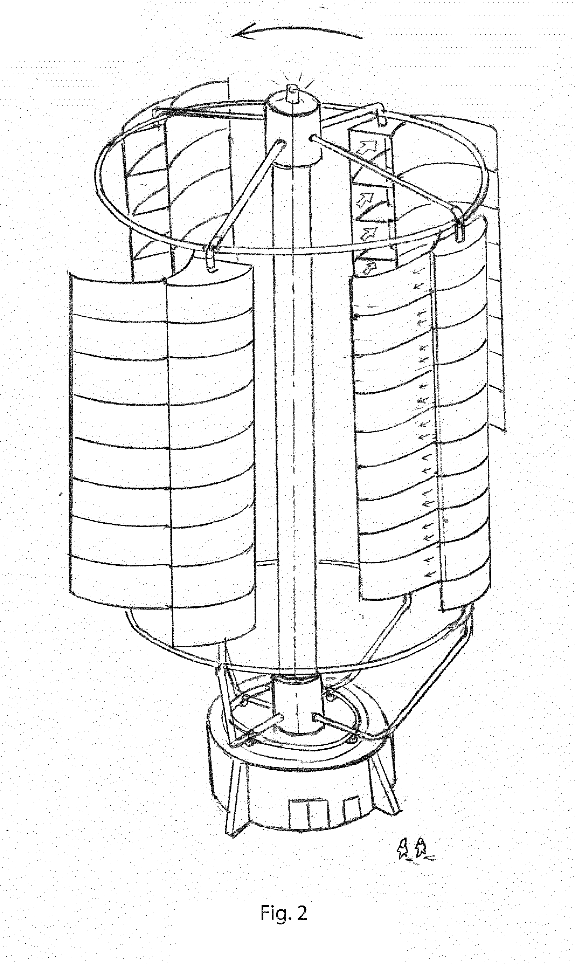

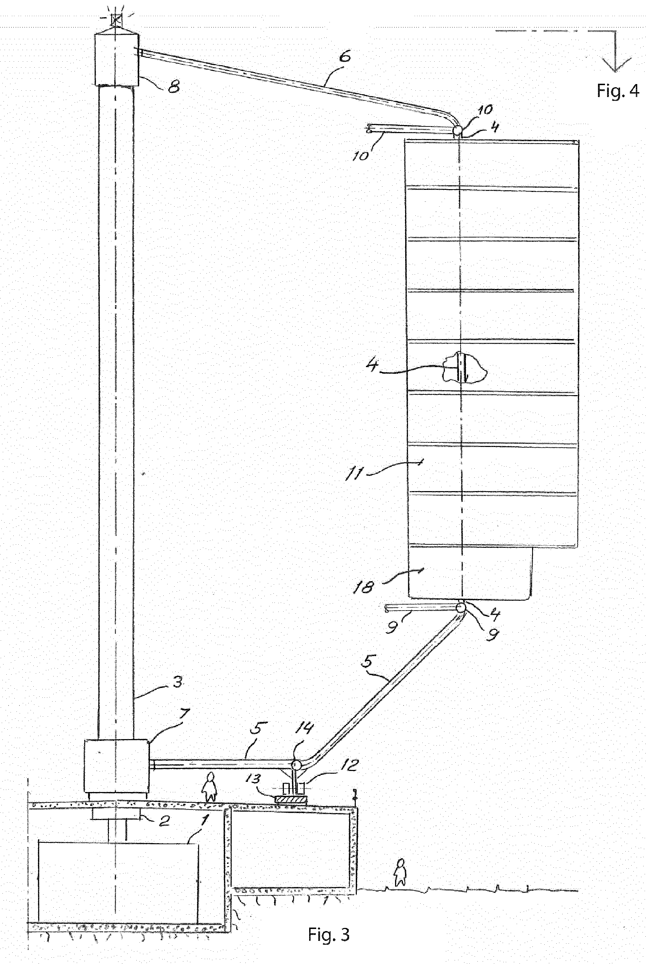

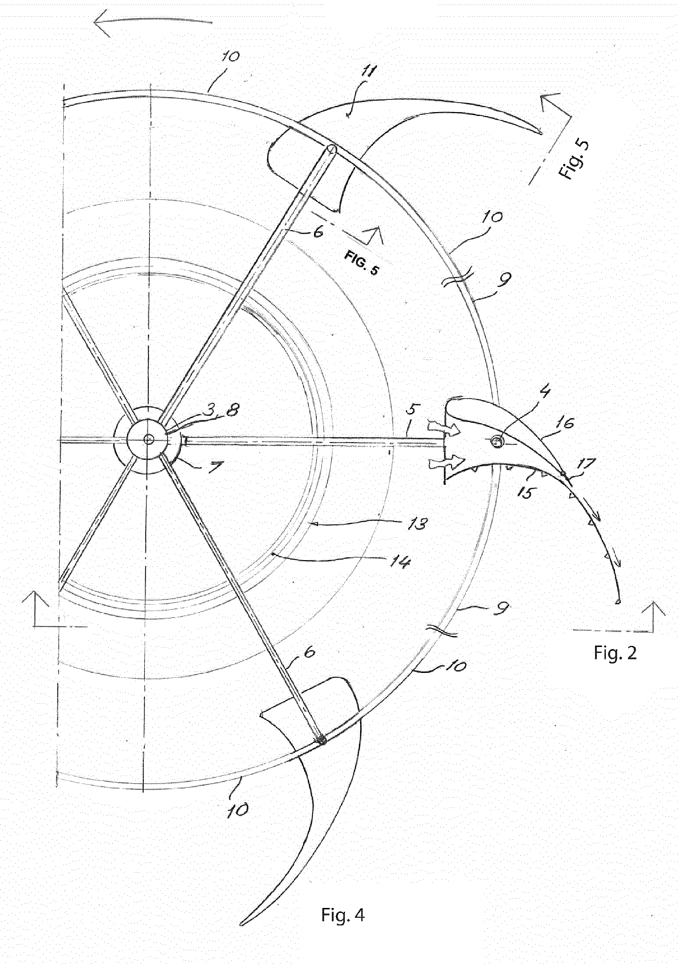

Figure 2 shows an overview view of an example of a vertical wind power plant. In the illustrated example, several shoe wings are stacked on top of each other, but it can also have one on each shaft. Figure 3 shows a half side view for an example of a vertical wind power plant. Figure 4 shows a half view from above for an example of a vertical wind power plant.

The vertical wind power plant comprises a central shaft tower 3, at least two wing shafts 4 arranged at a distance from the central shaft tower 3, at least one wing shaft 5 for each of the at least two wing shafts 4 connecting the central shaft tower 3 and the respective wing shaft and at least one bucket-wing 11 as above arranged on each of the at least two wing axes 4.

The two wing shafts 4 are for instance arranged parallel to the central shaft tower 3 but can also be angled so that the profile of the wind power plant tapers upwards or downwards.

The vertical wind power plant may comprise that the at least one wing spoke 6 comprises a lower wing shaft 5 for each of the at least two wing shafts 4 connecting the central shaft tower 3 and a lower part of the respective wing shaft, and an upper wing spoke 6 for each of the at least two wing shafts 4 connecting the central shaft tower and an upper part of the respective wing shaft. Using two wing spokes makes the construction more stable and is particularly advantageous for large constructions.

The inner end of the rear wing blade 15 and the front profile wing blade 16, respectively, is the part which is arranged closest to the central shaft tower 3 and the outer end is arranged on the opposite side from the inner end.

The vertical wind power plant may comprise at least two bucket-wings which are arranged stacked on each other on each of the at least two wing shafts 4. Thus, bucket-wings can be stacked on the wing shafts 4 to create a higher composite bucket-wing 11 for a larger wind power plant.

The vertical wind power plant may comprise an installation gondola 18 arranged on each of the at least two wing shafts 4, the installation gondola 18 comprising a fan 19 and a channel system 20 arranged to blow air into channels arranged in the bucket-wing 11. The bucket-wings can thus have air supplied to their channels from the installation gondola 18.

The vertical wind power plant may comprise at least one support wheel 12 per lower wing spokes 5, mounted on respective lower wing spokes 5 and arranged to roll on a ground below the vertical wind power plant to distribute the load towards the ground. With support wheels that help to distribute the load towards the ground, the load on the wind power plant's load-bearing components such as the shaft tower and the wing cranes will not be as large. Larger wind power plants can then be built.

Wind Wing Power-Carousel, WWC, can thus have a shaft tower 3 as the center of a high carousel cage with a large circumference and a number of evenly distributed high and vertical wing axes 4 along the periphery which together with lower and upper wing spokes 5, 6 towards the shaft tower 3 form a continuous and strong carousel cage.

Wind, wing power-carousel is a term used instead of vertical wind power plant which comprises the definition of vertical wind power plant but which also comprises the traction force that occurs due to the negative pressure formed on the front, in the direction of rotation, of the bucket-wing.

Each wing shaft 4 carries at least one vertical bucket-wing 11 or, for example, several stacked bucket-wings with the same total height as the shaft.

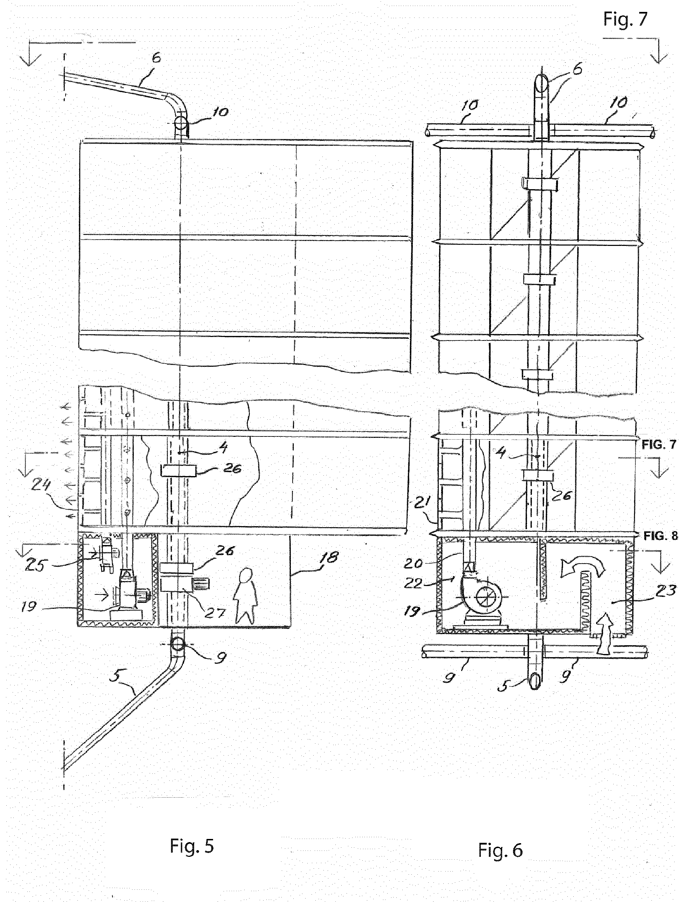

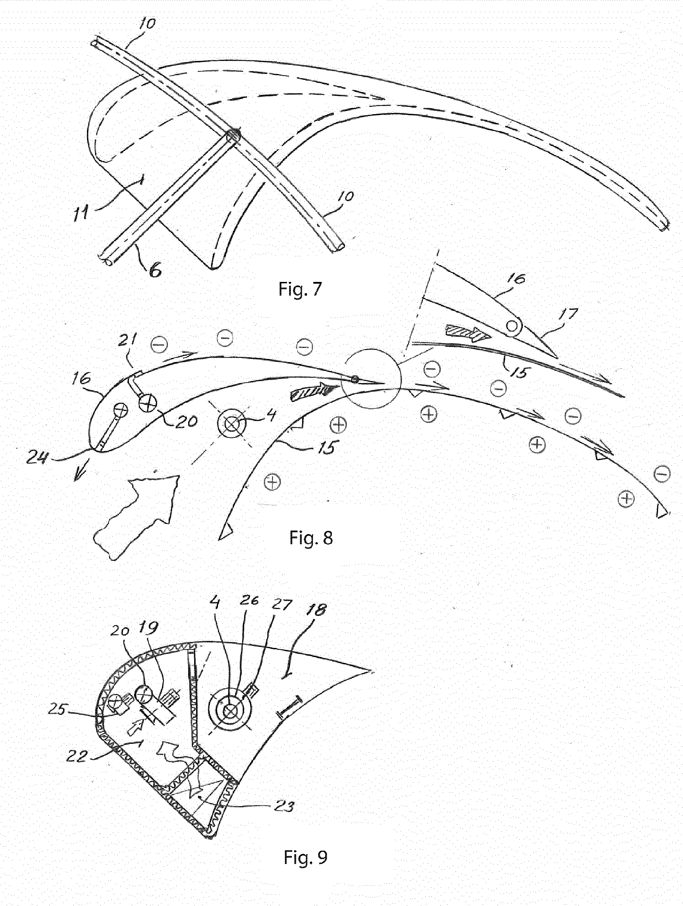

Figure 5 shows a side view of a sample bucket-wing 11. Figure 6 shows a front view of a sample bucket-wing 11. Figure 7 shows a top view of a sample bucket-wing 11. Figure 8 shows a top view of a sample bucket-wing 11. Figure 9 shows a top view of an example installation gondola 18.

In figure 8 you can see pyramid-shaped profiles mounted on the concave side of the rear wing blade. These can be used here to strengthen the construction of the wing blade and to create additional resistance for the wind blowing in towards the concave side. Greater resistance means that the air is used more efficiently to spin the wind power plant.

Wind Wing Power-Carousel, is a device that, with the help of air as a medium, centrifugal force and fluid engineering laws, is comprised as the power-generating unit in a plant for the production of CO2-free electric power or machine power.

Wind Wing Power-Carousel with central shaft tower 3 has, for example, along a large peripheral circle around the shaft tower 3 a number of high, vertical bars of bucket-wings with wedge-shaped bucket with wide opening towards the center and with a narrow open gap towards a large surface on each bucket-wing. During the rotation of the bucket-wings along the periphery, air is captured through the bucket opening and pressed by the centrifugal force at high pressure towards the narrow gap so that a flat jet of air flushes the entire free front of the bucket-wing (Coanda effect) at high speed, creating great negative pressure along the entire surface.

The force of the negative pressure along the entire free front of the bucket-wings multiplied by the long lever radius towards the center is transmitted together with the force of the other bucket-wings to the rotation of the shaft tower 3 which drives the connected generator 1 or machine.

For independent start of WWC and for regulating the effect in weak wind conditions, each bucket-wing 11 can be supplemented with a speed-controlled high-pressure fan 19 and a channel system that distributes high-pressure air to vertical air knives 21 in the front edge of the front profile blade. Creates negative pressure and thus extra and adjustable traction even for this front wing part.

Each bucket-wing 11 is, for example, suspended with bearings for the wing shaft 4 and has a screw gear for adjusting the angle of the bucket-wing relative to the peripheral radius for regulating speed and power under different wind conditions and for lowering in extreme wind.

Help to carry of the weight of the power carousel and breaks in the axle tower 3 can take place with support wheels 12 mounted on each lower axle 5 of the wing axle. The support wheels 12 distribute the load towards an underlying circular support path, located on the underlying installation building at about half the length of the radius of the carousel cage, which enables the wide circle periphery with a long lever radius.

The wind blows most of the year and like all other vertical wind power plants it always has the right side towards the wind and the bucket-wing/bucket-wings' concave back with a large area gives in tailwind great force which with the long lever radius is transferred to the shaft tower 3.

A Wind Wing Power-Carousel, WWC, drives the underlying connected machine, for example generator 1 via coupling 2 which is built into the installation building. These units are not comprised in the invention itself.

Wind Wing Power-Carousel can be located on top of an installation building and the vertical wind power plant consists of a central and rotating shaft tower 3 with a number of vertical and high wing shafts 4, evenly distributed along the circular periphery of the shaft tower with a large radius. The vertical wing shafts 4 can be fastened with lower wing spoke 5 towards the lower tower hub 7 of the shaft tower and with upper wing spokes 6 towards upper tower hubs 8. The wing shafts in the periphery can be braced horizontally and between each other cohesive carousel cage is formed with the shaft tower 3 in the center.

Each wing shaft 4 has the function of a carrier and suspension of one or more bucket-wings 11 with a large width and which can have the same height as the wing shaft 4.

For large vertical wind power plants, support may be needed for the construction. In such cases, the weight of the carousel cage with its bucket-wings and refractions due to wind forces which during rotation are transferred to the shaft tower attachment and bearing in the lower tower hub 7, are taken up with a number of support wheels 12, mounted on respective lower wing spoke 5. The support wheels 12 can then load a circular support track 13, centered around the shaft tower 3 and with about half the radius of circular periphery. The support track rests towards the roof of the underlying (cylindrical) installation building for generator 1 with auxiliary equipment.

The horizontal part of the lower wing spokes 5 over the roof of the installation building can also be braced with each other with horizontal support wheel arches 14 on the same radius as the underlying support path and is also comprised in the assembled construction of the carousel cage.

Each vertical bucket-wing 11 is suspended in its wing shaft 4, for example with bearings 26 and consists of a rear wing blade 15, concave and rearward bent with a large width and of a mainly profile wing blade 16 with, for example about a third width of the rear wing blade 15. Rear and the front wing blades have a common wide opening towards the shaft tower 3 in the center and the front profile wing blade 16 bends off and connects to the convex front of the rear wing blade so that a narrow vertical gap is formed. The tip of the profile wing blade towards the gap ends with a gap ruler 17, which can be adjustable for setting the gap opening towards the rear wing blade 15.

The bucket-wing 11 can be stacked in several height sections to catch the enclosed volume of air, where each height section forms a bucket-wing 11, which tapers with a curved wedge shape towards the narrow vertical gap.

The fact that the bucket-wings can be stacked in height sections enables rational manufacture of less bulky units with easier transport to the construction place, where the height sections are assembled into a stack of bucket-wings.

The Wind Wing Power-Carousel's rotation, when the respective bucket-wing 11 is in tailwind position, is driven by the wind pressure towards the concave back of the rear wing blade, but mainly the entire Wind Wing Power-Carousel is driven by its own traction around the . the negative pressure on the free and convex front of the rear wing blade. During rotation, the wedge-shaped air volume of the high-pressure centrifugal force is pressed towards the narrow gap so that a flat jet of air coils the free convex front of the rear wing blade (Coanda effect) at high speed, creating negative pressure along the entire front.

The force of the negative pressure along the entire free convex front of the rear wing blade, multiplied by the long lever radius towards the center, is transmitted to the rotation of the shaft tower which drives the connected generator 1 or machine.

The total power of the power carousel is determined by several factors such as the number of axles to attach bucket-wings, number of bucket-wings, for example 3, 4, 5 or 6, height and width of each bucket-wing 11, the radius of the circular periphery and the peripheral speed of the bucket-wings.

### A. Installation gondola under bucket-wing / bucket-wings

Wind Wing Power-Carousel can be equipped with a number of added features adapted to operating requirements and the environmental conditions of different construction places. Necessary equipment for this purpose is then installed in an installation gondola 18, assembled with the lowest height section in the respective stack of bucket-wings 11.

### B. Extra driving force for front profile wing blades when the wind is still

For independent start of Wind Wing Power-Carousel and for regulating the effect in weak wind conditions, each bucket-wing 11 can be supplemented with a speed-controlled high-pressure fan 19 and a channel system 20 that distributes high-pressure air to vertical air knives 21 in the rounded front of the front profile wing blade 16. The air knife flows air at high speed over the entire convex surface of the front profile wing blade and creates negative pressure and thus extra and adjustable traction even for this wing part. The high-pressure fan 19 is speed-controlled with remote control from the control room and is placed in a sound-damped fan room 22 in the installation gondola 18 and picks up outdoor air from below via a sound-damped outdoor air channel 23.

### C. Protection for the wide inlet opening of the bucket-wing

Under certain operating conditions, in order to prevent birds, insects or snow from being sucked into the wide inlet opening of the bucket-wing, the rounded leading edge of the front profile wing blade can also be supplemented with an air knife 24 but with air direction towards the shaft tower 3 to form an air curtain parallel to the wide inlet opening wedge-shaped air volume. The air knife 24 is then driven via a channel system in the profile wing blade and a smaller fan 25 which is also placed in the fan space 22 and with air from the outdoor air channel 23.

### D. Heating of bucket-wing in winter climate

For systems in cold and snowy climates, the outer surfaces of the bucket-wing (s) can be kept warm by a fan unit with electric heater and a channel system distributing circulating hot air in the connected and enclosed volumes of the bucket-wing to prevent ice and snow cover. In these cases, the fan unit is placed in installation gondola 18.

### E. Regulation of the effect of the Wind Wing Power-Carousel

Each bucket-wing 11 is suspended, for example, with articulated bearing 26 to the wing shaft 4 and has a screw gear 27 for adjusting the angle of the bucket-wing in relation to the peripheral radius for regulating the speed and power of the power carousel under different wind conditions. The screw gear is placed in the installation gondola 18 and is remotely controlled from the control room.

### F. Carousel-cage

The entire carousel cage with shaft tower 3, wing shafts 4 and lower and upper wing cups 5, 6 can be designed as an internally completely open pipe system. Inside the pipes, wires for electric power and control equipment are laid, attached to cable clamps on the far inside of the pipes from the center. This also applies to lower and upper peripheral arches 9, 10 and support wheel arches 14 in cases where these are used.

The shaft tower 3 can have an internal ladder to the upper tower hub 8 for service of the top plants etc.

### G. Warming of the carousel cage in cold climates

For installation in cold climates, the entire inside of the carousel cage pipe system as described in point F above can also be heated by circulating hot air from fan units which in that case is placed in the shaft tower's lower tower hub 7. The hot air is distributed through vanes and wing shafts 4 and back to the fan unit via the upper tower hub 8 of the shaft tower and the shaft tower 3.

Externally, the carousel cage is preferably made with smooth surfaces without protruding flanges and bolts to reduce the risk of ice and snow accumulating.

### H. Support wheels with circular support track

The weight of the Wind Wing Power-Carousel and refractions of the power carousel in the shaft tower 3 can be helped to carry with support wheels 12 mounted on the lower wing spokes 5 of each wing shaft. Along the circular support track 13, pantographs for the carousel's own electric power requirements and support track with support wheels 12 are placed and pantographs are weatherproofed and soundproofed, coordinated with the above support wheel arches 14.

### References

1. Generator
2. Coupling generator
3. Shaft tower, rotating
4. Wing shaft
5. Lower wing spoke
6. Upper wing spoke
7. Lower tower hub
8. Upper tower hub
9. Lower peripheral arch
10. Upper peripheral arch
11. Bucket-wing
12. Support wheels
13. Circular support path
14. Support wheel arch
15. Rear wing blade
16. Front profile wing blade
17. Distance ruler, adjustable
18. Installation gondola
19. High pressure fan for front profile wing blades
20. Channel system for front profile wing blades
21. Air knife for front profile wing blades
22. Fan room, soundproofed
23. Outdoor air channel, soundproofed
24. Air knife for air curtain
25. Air curtain fan
26. Storage for bucket-wing, articulated
27. Screw gear for articulated bucket-wing

## Claims

1. A vertical wind power plant comprising:
a central shaft tower (3),
at least two wing shafts (4) arranged at a distance from the central shaft tower,
a lower wing spoke (5) for each of the at least two wing shafts (4) connecting the central shaft tower (3) and a lower part of the respective wing shaft,
an upper wing spoke (6) for each of the at least two wing shafts (4) connecting the central shaft tower and an upper part of the respective wing shaft and
at least one bucket-wing (11) arranged on each of the at least two wing shafts (4),
wherein the bucket-wing (11) comprises:
a rear wing blade (15) being rearward bent and having a concave side for capturing wind, a convex side, an inner end and an outer end, and
a front profile wing blade (16) having a concave side, a convex side, an inner end and an outer end,
wherein the front profile wing blade (16) and the rear wing blade (15) are arranged at a distance from each other so that the concave side of the front profile wing blade faces the convex side of the rear wing blade so as to form a passage between the front profile wing blade and the rear wing blade (15) with an opening between the inner ends, wherein the front profile wing blade (16) and the rear wing blade (15) are arranged so that the passage tapers in a direction from the inner ends towards the outer ends, and wherein the front profile wing blade (16) is shorter between the inner end and the outer end than the rear wing blade (15), preferably the front profile wing blade (16) is one third of the rear wing blade (15),
wherein the rear wing blade (15) and the front profile blade (16) are arranged to form a wedge-shaped and backwardly bent bucket with said opening, through which opening, upon rotation of the vertical wind power plant, air is captured and forced through said passage of the centrifugal force,
wherein the bucket-wing (11) further comprises:
a floor,
a roof,
wherein the floor is arranged between a lower edge of the front profile wing blade (16) and a lower edge of the rear wing blade (15) and the roof is arranged between an upper edge of the front profile wing blade (16) and an upper edge of the rear wing blade (16), so that the passage between the front profile wing blade and the rear wing blade (15) is enclosed on all sides and open at the ends.

2. The vertical wind power plant according to claim 1, wherein the front profile wing blade (16) comprises a channel (20) for air with an outlet on the convex side of the front profile wing blade with the air flow directed towards the outer end of the front profile wing blade.

3. The vertical wind power plant according to claim 1 or 2, wherein the front profile wing blade (16) comprises a channel for air with an outlet at the inner end of the front profile wing blade (16) for blowing out air which prevents external objects from being sucked in. between the rear wing blade (15) and the front profile wing blade (16).

4. The vertical wind power plant according to any one of claims 1 to 3, wherein the outer end of the front profile wing blade comprises a distance-ruler (17) which is adjustable to change the distance between the outer end and the rear wing blade (15).

5. The vertical wind power plant according to any one of claims 1 to 4, wherein the inner ends of the rear wing blade (15) and the front profile wing blade (16), respectively, are the parts arranged closest to the central shaft tower and the outer ends are arranged on opposite side from the inner ends.

6. The vertical wind power plant according to any one of claims 1 to 5, comprising at least two bucket-wings arranged stacked on each other on each of the at least two wing axes (4).

7. The vertical wind power plant according to any one of claims 2 to 6, comprising an installation gondola (18) arranged on each of the at least two wing shafts (4), wherein the installation gondola comprises a high-pressure fan (19) and a fan (25) arranged to blow air to said channels arranged in the bucket-wing (11).

8. The vertical wind power plant according to any one of claims 1 to 7, comprising at least one support wheel (12) per lower wing spoke (5), mounted on respective lower wing spoke (5) and arranged to roll towards a ground below the vertical wind power plant to distribute the load towards the ground.

## Patentansprüche

1. Vertikalwindkraftanlage, umfassend:
einen zentralen Mastturm (3),
wenigstens zwei in einem Abstand von dem zentralen Mastturm angeordnete Flügelwellen (4),
für jede der wenigstens zwei Flügelwellen (4), eine den zentralen Mastturm (3) und einen unteren Teil der jeweiligen Flügelwelle verbindende untere Flügelspeiche (5), für jede der wenigstens zwei Flügelwellen (4), eine den zentralen Mastturm und einen oberen Teil der jeweiligen Flügelwelle verbindende obere Flügelspeiche (6), und
an jeder der wenigstens zwei Flügelwellen (4), wenigstens einen daran angeordneten Schaufelflügel (11), wobei der Schaufelflügel (11) umfasst:
ein nach hinten gekrümmtes hinteres Flügelblatt (15) mit einer konkaven Seite zum Einfangen von Wind, einer konvexen Seite, einem inneren Ende und einem äußeren Ende, und
ein vorderes Profilflügelblatt (16) mit einer konkaven Seite, einer konvexen Seite, einem inneren Ende und einem äußeren Ende,
wobei das vordere Profilflügelblatt (16) und das hintere Flügelblatt (15) in Abstand zueinander angeordnet sind, so dass die konkave Seite des vorderen Profilflügelblatts der konvexen Seite des hinteren Flügelblatts gegenüberliegt, um einen Durchgang zwischen dem vorderen Profilflügelblatt und dem hinteren Flügelblatt (15) mit einer Öffnung zwischen den inneren Enden zu bilden, wobei das vordere Profilflügelblatt (16) und das hintere Flügelblatt (15) derart angeordnet sind, dass sich der Durchgang in einer Richtung von den inneren Enden zu den äußeren Enden hin verjüngt, und wobei das vordere Profilflügelblatt (16) zwischen dem inneren Ende und dem äußeren Ende kürzer ist als das hintere Flügelblatt (15), vorzugsweise wobei das vordere Profilflügelblatt (16) ein Drittel des hinteren Flügelblatts (15) ist,
wobei das hintere Flügelblatt (15) und das vordere Profilflügelblatt (16) dazu angeordnet sind, eine keilförmige und nach hinten gekrümte Schaufel mit der Öffnung zu bilden, durch welche Öffnung bei Drehung der Vertikalwindkraftanlage Luft eingefangen und durch Zentrifugalkraft durch den Durchgang gezwungen wird,
wobei der Schaufelflügel (11) ferner umfasst:
einen Boden,
ein Dach,
wobei der Boden zwischen einer Unterkante des vorderen Profilflügelblatts (16) und einer Unterkante des hinteren Flügelblatts (15) angeordnet ist und das Dach zwischen einer Oberkante des vorderen Profilflügelblatts (16) und einer Oberkante des hinteren Flügelblatts (16) angeordnet ist, so dass der Durchgang zwischen dem vorderen Profilflügelblatt und dem hinteren Flügelblatt (15) an allen Seiten eingeschlossen und an den Enden offen ist.

2. Vertikalwindkraftanlage nach Anspruch 1, wobei das vordere Profilflügelblatt (16) einen Kanal (20) für Luft mit einem Auslass an der konvexen Seite des vorderen Profilflügelblatts aufweist, wobei der Luftstrom zum äußeren Ende des vorderen Profilflügelblatts gerichtet ist.

3. Vertikalwindkraftanlage nach Anspruch 1 oder 2, wobei das vordere Profilflügelblatt (16) einen Kanal für Luft mit einem Auslass am inneren Ende des vorderen Profilflügelblatts (16) aufweist, um Luft auszublasen, die verhindert, dass externe Objekte zwischen dem hinteren Flügelblatt (15) und dem vorderen Profilflügelblatt (16) angesaugt werden.

4. Vertikalwindkraftanlage nach einem der Ansprüche 1 bis 3, wobei das äußere Ende des vorderen Profilflügelblatts ein zur Veränderung des Abstandes zwischen dem äußeren Ende und dem hinteren Flügelblatt (15) verstellbares Abstandsblatt (17) umfasst.

5. Vertikalewindkraftanlage nach einem der Ansprüche 1 bis 4, wobei die inneren Enden des hinteren Flügelblatts (15) bzw. des vorderen Profilflügelblatts (16) die dem zentralen Mastturm am nächsten angeordneten Teile sind und die äußeren Enden an der den inneren Enden entgengegestzten Seite angeordnet sind.

6. Vertikalwindkraftanlage nach einem der Ansprüche 1 bis 5, umfassend an jeder der wenigstens zwei Flügelwellen (4), wenigstens zwei übereinander gestapelt angeordnete Schaufelflügel.

7. Vertikalwindkraftanlage nach einem der Ansprüche 2 bis 6, umfassend an jeder der wenigstens zwei Flügelwellen (4), eine daran angeordnete Installationsgondel (18), wobei die Installationsgondel ein Hochdruckgebläse (19) und ein Gebläse (25), angeordnet zum Blasen von Luft zu den in dem Schaufelflügel (11) angeordneten Kanälen, umfasst.

8. Vertikalwindkraftanlage nach einem der Ansprüche 1 bis 7, umfassend ein Stützrad (12) pro unterer Flügelspeiche (5), das an der jeweiligen unteren Flügelspeiche (5) angebracht und dazu angeordnet ist, bezüglich eines Bodens unterhalb der Vertikalwindkraftanlage zu rollen, um die Last bezüglich des Bodens zu verteilen.

## Revendications

1. Centrale éolienne verticale comprenant :
un pylône central (3),
au moins deux arbres d'aile (4) agencés à une distance du pylône central, un rayon d'aile inférieur (5) pour chacun des au moins deux arbres d'aile (4) reliant le pylône central (3) et une partie inférieure de l'arbre d'aile respectif, un rayon d'aile supérieur (6) pour chacun des au moins deux arbres d'aile (4) reliant le pylône central et une partie supérieure de l'arbre d'aile respectif et au moins une aile-caisson (11) agencée sur chacun des au moins deux arbres d'aile (4), dans laquelle l'aile-caisson (11) comprend :
une pale d'aile arrière (15) qui est courbée vers l'arrière et ayant un côté concave pour capturer le vent, un côté convexe, une extrémité interne et une extrémité externe, et
une pale d'aile profilée avant (16) ayant un côté concave, un côté convexe, une extrémité interne et une extrémité externe,
dans laquelle la pale d'aile profilée avant (16) et la pale d'aile arrière (15) sont agencées à une distance l'une de l'autre de sorte que le côté concave de la pale d'aile profilée avant fait face au côté convexe de la pale d'aile arrière de manière à former un passage entre la pale d'aile profilée avant et la pale d'aile arrière (15) avec une ouverture entre les extrémités internes, dans laquelle la pale d'aile profilée avant (16) et la pale d'aile arrière (15) sont agencées de telle sorte que le passage s'effile dans une direction depuis les extrémités internes vers les extrémités externes, et dans laquelle la pale d'aile profilée avant (16) est plus courte entre l'extrémité interne et l'extrémité externe que la pale d'aile arrière (15), de préférence la pale d'aile profilée avant (16) représente un tiers de la pale d'aile arrière (15),
dans laquelle la pale d'aile arrière (15) et la pale profilée avant (16) sont agencées pour former un caisson en forme de coin et courbé vers l'arrière avec ladite ouverture, ouverture à travers laquelle, lors de la rotation de la centrale éolienne verticale, l'air est capturé et forcé à travers ledit passage de la force centrifuge, dans laquelle l'aile-caisson (11) comprend en outre : un fond, un sommet,
dans laquelle le plancher est agencé entre un bord inférieur de la pale d'aile profilée avant (16) et un bord inférieur de la pale d'aile arrière (15) et le toit est agencé entre un bord supérieur de la pale d'aile profilée avant (16) et un bord supérieur de la pale d'aile arrière (16), de sorte que le passage entre la pale d'aile profilée avant et la pale d'aile arrière (15) est enfermé sur tous les côtés et ouvert aux extrémités.

2. Centrale éolienne verticale selon la revendication 1, dans laquelle la pale d'aile profilée avant (16) comprend un canal (20) pour l'air avec une sortie sur le côté convexe de la pale d'aile profilée avant avec l'écoulement d'air dirigé vers l'extrémité externe de la pale d'aile profilée avant.

3. Centrale éolienne verticale selon la revendication 1 ou 2, dans laquelle la pale d'aile profilée avant (16) comprend un canal pour l'air avec une sortie à l'extrémité interne de la pale d'aile profilée avant (16) pour souffler l'air ce qui empêche l'aspiration d'objets extérieurs entre la pale d'aile arrière (15) et la pale d'aile profilée avant (16) .

4. Centrale éolienne verticale selon l'une quelconque des revendications 1 à 3, dans laquelle l'extrémité externe de la pale d'aile profilée avant comprend une règle d'écartement (17) qui est réglable pour modifier la distance entre l'extrémité externe et la pale d'aile arrière (15).

5. Centrale éolienne verticale selon l'une quelconque des revendications 1 à 4, dans laquelle les extrémités internes de la pale d'aile arrière (15) et de la pale d'aile profilée avant (16), respectivement, sont les parties agencées les plus proches du pylône central et les extrémités externes sont agencées sur le côté opposé aux extrémités internes.

6. Centrale éolienne verticale selon l'une quelconque des revendications 1 à 5, comprenant au moins deux ailes-caisson agencées empilées l'une sur l'autre sur chacun des au moins deux axes d'aile (4).

7. Centrale éolienne verticale selon l'une quelconque des revendications 2 à 6, comprenant une nacelle d'installation (18) agencée sur chacun des au moins deux arbres d'aile (4), dans laquelle la nacelle d'installation comprend un ventilateur haute pression (19) et un ventilateur (25) agencés pour souffler l'air vers lesdits canaux agencés dans l'aile-caisson (11).

8. Centrale éolienne verticale selon l'une quelconque des revendications 1 à 7, comprenant au moins une roue de support (12) par rayon d'aile inférieur (5), montée sur un rayon d'aile inférieur (5) respectif et agencée pour rouler vers un sol en dessous du Centrale éolienne verticale pour répartir la charge vers le sol.
